# FASCICULE DE BREVET EUROPEEN

(11) **EP 0 390 015 B1**
(45) Date de publication et mention de la délivrance du brevet: **14.12.1994**
(21) Numéro de dépôt: 90105680.4
(22) Date de dépôt: 26.03.1990
(51) Int. Cl.: H04L 12/56, H04L 29/06

(54) **Dispositif de traitement de messages de signalisation dans un réseau de télécommunication en technique temporelle asynchrone**
Vorrichtung zur Verarbeitung von Signalisierungsnachrichten in einem asynchronen Zeitkommunikationsnetz
Device for processing signalling messages in a communication network using an asynchronous time technique

(30) Priorité: 30.03.1989 FR 8904168
(43) Date de publication de la demande: 03.10.1990
(73) Titulaire: ALCATEL CIT, 75008 Paris (FR)
(72) Inventeur: Balzano, Jean-Michel, F-22700 Perros Guirec (FR)
(74) Mandataire: Weinmiller, Jürgen

(56) Documents cités:
- EP-A- 0 300 942
- EP-A- 0 301 934
- WO-A-87/07462
- GLOBAL TELECOMMUNICATIONS CONFERENCE 1987, CONFERENCE RECORD, Tokyo, 15-18novembre 1987, vol. 3, pages 2095-2099, IEEE, New York, US; T. AE et al.: "Adesing of high speed network controller"
- IEEE NETWORK, vol. 3, no. 1, janvier 1989, pages 17-22, New York, US; M.J.RIDER: "Protocols for ATM access networks"

## Description

La présente invention est du domaine des communications de données et concerne le traitement de la signalisation dans un protocole de communication adapté aux particularité de la Technique Temporelle Asynchrone, en abrégé TTA, et plus particulièrement le traitement des erreurs des messages de signalisation.

Lors de la traversée d'un réseau de communication les données transmises sont soumises à diverses perturbations pouvant entraîner un taux d'erreurs incomptatible avec la qualité de transmission requise. Pour pallier ce phénomène, on utilise un protocole de transmission dont le principe consiste, le plus souvent, à fragmenter les données transmises, à détecter lors de la réception les fragments comportant des erreurs et à demander leur retransmission.

Dans la norme OSI, Interconnexion de Systèmes Ouverts, qui définit sept couches pour les échanges entre systèmes, la sous-couche 2.1. concerne la détection des erreurs, et son rôle consiste à fragmenter et réassembler les données en trames, et à détecter les erreurs sur les trames. Les procédés et dispositifs existants, qui traitent, par exemple, la sous-couche 2.1. du protocole HDLC, sont adaptés au traitement d'un flux continu de données qui se présentent en entrée ; ils utilisent donc un moyen de fragmentation des données qui leur est spécifique :
délimitation de la trame par ajout d'un motif connu en début et fin de trame, "01111110" pour HDLC ;
insertion systématique d'un "0" lorsque cinq "1" sont reconnus à l'intérieur d'une trame, pour éviter les imitations des motifs délimiteurs de trame.
Ces procédés et dispositifs existants sont peu adaptés à la technique temporelle asynchrone, à cause des spécificités suivantes de celle-ci :
- fragmentation naturelle des données sous forme de cellules de par exemple 36 octets (dont 32 utiles) dont la délimitation est connue,
- après la traversée d'un réseau, entrelacement sur un même support de cellules d'un grand nombre de communications différentes.

L'utilisation des dispositifs existants imposerait donc d'une part une fragmentation redondante des données et d'autre part la nécessité de désentrelacer les données avant traitement.

Par ailleurs, la demande de brevet WO-A- 8 707 462 décrit une interface pouvant être située dans un réseau de télécommunication, ou à une terminaison de ce réseau, pour assurer essentiellement la conversion de rythme de transmission, la combinaison de plusieurs signaux, et la conversion de protocole, entre des appareils dissemblables. Chaque source fournit des données sous la forme de paquets. Mais il n'est pas question de format du type cellule ATM, ni d'assurer les fonctions : détection d'erreur; détection de pertes ou d'ajouts de cellules; fragmentation en cellules d'un message de signalisation ; désentrelacement des cellules relatives à plusieurs messages, à la réception.

L'invention a pour but de pallier les inconvénients des solutions connues et d'offrir aux messages de signalisation en Technique Temporelle Asynchrone de gros débits de transfert en réservant au protocole de la couche 2.1 un nombre d'octets minimum de la cellule.

L'invention a pour objet un dispositif de traitement de messages de signalisation dans un réseau de télécommunications en technique temporelle asynchrone (RTTA) dans lequel les échanges d'informations de toute nature se font par cellules selon un protocole de communication adapté à la technique asynchrone chaque cellule étant précédée d'un en-tête comportant un numéro de circuit virtuel, lesdits messages de signalisation étant échangés entre des stations de commande reliées par le réseau de télécommunications et exploités dans les stations de commande par un processeur traitant le niveau 2.2 du protocole de communication, caractérisé par le fait qu'il est implanté dans chaque station de commande pour la relier au réseau de télécommunications et qu'il comporte un circuit de traitement de protocole relié au réseau de télécommunications, une mémoire, une mémoire de commande d'émission, une mémoire de commande de réception, un bus de données relié au circuit de traitement, à la mémoire et aux mémoires de commande, un bus d'adresses relié au circuit de traitement et à la mémoire, et un bus relié à la mémoire, aux mémoires de commande et audit processeur, et que le circuit de traitement assure des fonctions de niveau 2.1 du protocole : détection des erreurs de transmission cellule par cellule, détection des pertes ou des ajouts de cellules, fragmentation en cellules d'un message de signalisation délivré par le processeur, et désentrelacement des celules relatives à plusieurs messages de signalisation à la réception.

Le dispositif de l'invention s'appuie sur un protocole dont la couche détection d'erreurs de niveau 2.1., est basée sur la cellule utilisée dans la TTA. Il permet :
- la fragmentation et le réassemblage en cellules des messages de signalisation à transmettre ; la taille des messages peut être grande (4 K octets) devant celle des cellules pour permettre de gros débits de transfert, par exemple de l'ordre de 15 Mbit/s.
- la détection d'erreurs cellule par cellule, par l'utilisation d'un contrôle cyclique par redondance à 16 bits portant sur les données utiles de la cellule,
- la détection de la perte, ou de l'ajout, de cellules par l'utilisation d'un compteur de séquencement incrémenté à chaque nouvelle cellule de la communication ; en effet, en cas de surcharge, un réseau TTA est susceptible de perdre ou d'ajouter des cellules sans en avertir l'utilisateur,
- le désentrelacement des cellules de signalisation des différentes communications.

Seuls des messages corrects et complets, donc sans erreur ni perte ou ajout de cellule, sont remis aux niveaux supérieurs. Le dispositif permet de traiter 2048 communications simultanées, chacune d'elles correspondant à un numéro de circuit virtuel différent. L'invention sera bien comprise par la description qui va suivre d'un exemple de réalisation illustré par les figures annexées dans lesquelles :
- la figure 1 représente schématiquement le dispositif de l'invention,
- les figures 2A et 2B représentent respectivement l'en-tête et le contenu utile d'une cellule,
- la figure 3 représente la mémoire d'émission du dispositif de la figure 1,
- la figure 4 représente un contexte d'émission de la mémoire d'émission,
- la figure 5 représente une commande dans une mémoire de commande d'émission,
- la figure 6 représente la mémoire de réception de la figure 1,
- la figure 7 représente un descripteur de la mémoire de réception,
- la figure 8 représente la structure d'un contexte de réception de la mémoire de réception,
- la figure 9 représente une commande dans une mémoire de commande de réception.

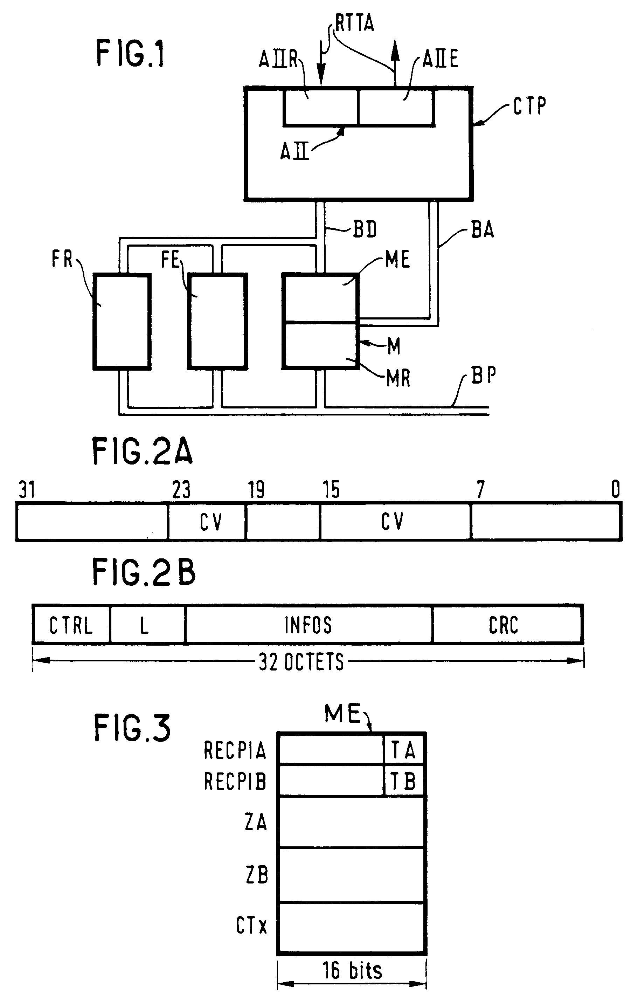

La figure 1 représente schématiquement le dispositif de l'invention qui traite le niveau 2.1 du protocole interne à un réseau en technique temporelle asynchrone RTTA ; le dispositif comprend un circuit de traitement du protocole CTP, une mémoire M, une mémoire de commande d'émission FE et une mémoire de commande de réception FR. Le circuit de traitement du protocole CTP est un réseau de cellules logiques programmables, tel que par exemple le composant XC 3090 de la société XILINX ; le circuit de traitement est muni d'une interface cellule AII constituée d'une interface d'émission AIIE et d'une interface de réception AIIR, reliées au réseau RTTA, et permettant l'émission et la réception de cellules. La mémoire M est une mémoire à accès aléatoire (RAM) double port, organisée en 32000 mots de 16 bits et comportant une partie mémoire d'émission ME et une partie mémoire de réception MR.

La mémoire M constitue un tampon où sont stockés les messages, le double port permettant de s'affranchir des problèmes d'allocation de bus de manière à optimiser les vitesses d'échange entre le circuit de traitement CTP et un processeur de traitement de niveau 2.2 auquel la mémoire M est reliée par un bus BP. Les mémoires de commande d'émission FR et de réception FR sont du type FIFO et permettent le dialogue entre le circuit de traitement CTP et le processeur de traitement de niveau 2.2 ; ces mémoires FE et FR sont constituées chacune par des mots de 16 bits. La mémoire M et les mémoires de commande FE et FR sont reliées au circuit de traitement CTP par un bus de données BD ; les mémoires de commande sont également reliées au bus BP ; la mémoire M est également reliée au circuit de traitement CTP par un bus d'adresses BA.

Les cellules de communication ont chacune 36 octets, soit 4 octets d'en-tête et 32 octets utiles. La figure 2A représente l'en-tête qui comporte 12 bits de numéro de circuit virtuel CV identifiant la communication à laquelle appartient la cellule ; le numéro de circuit virtuel est contenu dans les bits 8 à 15 et 20 à 23, repérés CV ; les 16 bits restants, 0 à 7, 16 à 19, 24 à 31, incluent un champ de détection et de correction d'erreurs sur l'en-tête et divers bits indépendants de l'application en cause.

La figure 2B représente le contenu utile d'une cellule de communication qui comporte :
un octet CTRL de contrôle ayant :
un bit D d'indication de début de message,
un bit F d'indication de fin de message,
un bit Ip d'indication de présence de l'octet L,
cinq bits N de numérotation de cellule, modulo 32.
un octet L indiquant la longueur utile des informations dans le champ INFOS.
un champ d'informations INFOS, supportant les niveaux supérieurs, deux octets CRC, de contrôle cyclique par redondance, portant sur les 32 octets de la cellule ; le polynôme générateur est : X ¹⁶ + X ¹² + X⁵ + 1.

Dans le cas ou le bit Ip est utilisé, il est traité par le circuit de traitement CTP et indique :
- Ip = 1, l'octet qui suit l'octet CTRL est l'octet L qui indique le nombre d'octets utiles dans le champ INFOS qui a 28 octets utiles au maximum.
- Ip = 0, l'octet qui suit CTRL est un octet d'information, il y a donc 29 octets utiles dans le champ INFOS

Dans le cas contraire, bit Ip non utilisé positionné à 1 à l'émission non lu à la réception, l'octet qui suit l'octet CTRL est toujours un octet de longueur même si le champ INFOS est entièrement utilisé.

Le dispositif de la figure 1 traite les deux sens de transmission pour 2048 circuits virtuels : pour cela il ne traite que les 11 bits de poids faible du numéro de circuit virtuel.

Dans le sens émission le dispositif comporte deux interfaces :
- une interface avec le processeur de traitement du niveau 2.2, constituée de la mémoire d'émission ME pouvant être écrite ou lue simultanément par le circuit de traitement CTP et ledit processeur, et de la mémoire de commande d'émission FE,
- et l'interface d'émission AIIE du circuit de traitement CTP.

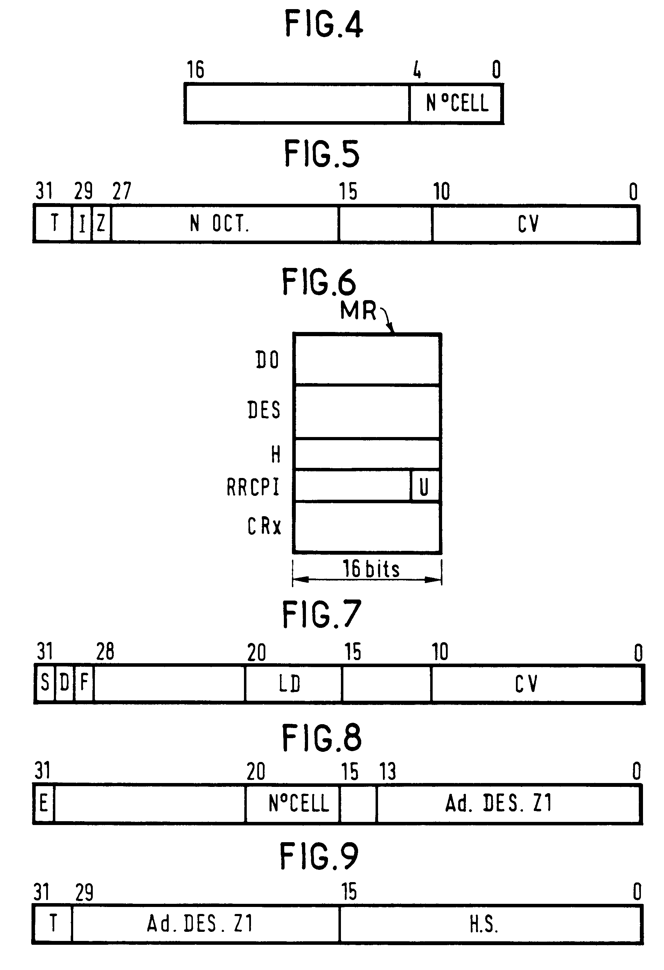

La mémoire d'émission ME, représentée schématiquement figure 3, est constituée de mots mémoires de 16 bits et comprend deux parties principales :
- une partie données découpée en deux zones ZA et ZB dans lesquelles sont stockés les messages à traiter et à transmettre. Chaque zone est dimensionnée pour recevoir un message de longueur extrême, 4 K octets,
- une partie contextes d'émission CTx utilisée pour la numérotation des cellules émises, champ N de l'octet de contrôle CTRL. Il existe un contexte d'émission par circuit virtuel traité, donc un total de 2048 contextes. Un contexte d'émission est un mot de 16 bits, figure 4, dont seuls les bits 0 à 4, sont utilisés, ces cinq bits, repérés No Cell, donnant le numéro de la cellule à émettre, et constituant un compteur de cellules, modulo 32.
- deux registres RECPIA et RECPIB, d'un mot mémoire chacun et dont un seul bit TA, TB est utilisé, sont écrits par le circuit de traitement CTP et lus par le processeur ; le bit TA, ou TB, est positionné à 1 par le circuit CTP à la fin de l'émission d'un message contenu dans la zone ZA, ou ZB, correspondante.

L'émission d'un message s'effectue de la manière suivante ; le processeur écrit le message complet à traiter dans l'une des deux zones ZA ou ZB libre de la mémoire d'émission, puis écrit dans la mémoire de commande d'émission FE une commande de quatre octets, cette commande étant représentée figure 5 et indiquant :
. CV, bits 0 à 10, le numéro de circuit virtuel sur lequel doit être émis le message (ce numéro sera inscrit dans l'en-tête de chaque cellule du message),
. Noct, bits 16 à 27, le nombre d'octets du champ informations du message,
. Z, bit 28, la zone ZA (Z=O) ou ZB (Z=1) dans laquelle est stocké le message à émettre,
. I, bit 29, pour indiquer que le circuit CTP doit envoyer une interruption au processeur pour lui signaler la fin de l'éxécution de la commande (c'est-à-dire la fin d'émission du message) ; dans tous les cas le circuit CTP positionne le bit TA, ou TB, du registre RECPIA, ou RECPIB.
. T, bits 30 et 31, le type de la commande, réservé pour usage ultérieur.
. les bits 11 à 15 sont inutilisés.

L'algorithme de traitement de l'émission est le suivant : le circuit de traitement de protocole CTP scrute de manière régulière l'état de la mémoire de commande d'émission FE, et lorsqu'elle n'est pas vide il procède aux opérations suivantes :
- lecture de la commande dans la mémoire de commande d'émission FE,
- Initialisation, dans le circuit CTP, d'un compteur d'octets restant à transmettre, avec le nombre d'octets, Noct, contenu dans la commande,
- Envoi sur le réseau TTA de l'en-tête de la première cellule du message ; il s'agit de quatre octets, figure 2A, incluant le numéro de circuit virtuel CV fourni par la commande (figure 5),
- Envoi de l'octet de contrôle CTRL (figure 2B) :
   . DF = "10" s'il s'agit de la première cellule du message, et si le compteur d'octets est supérieur à 28,
   . DF = "00" s'il s'agit d'une cellule intermédiaire et si le compteur d'octets est supérieur à 28,
   . DF = "01" s'il s'agit de la dernière cellule du message et si le compteur d'octets est inférieur ou égal à 28,
   . DF = "11" s'il s'agit de la première cellule du message et si le compteur d'octets est inférieur ou égal à 28 (le message ne contient qu'une seule cellule),
   . dans la description précédente, Ip n'est pas utilisé et dans ce cas, il est systématiquement positionné à 1 à l'émission,
- Lecture du compteur de cellules, figure 4, dans le contexte de la mémoire d'émission ME correspondant au circuit virtuel indiqué par la commande,
- Mise à jour, dans la mémoire d'émission du contexte correspondant au circuit virtuel, en y écrivant le numéro de la prochaine cellule à émettre ; cette mise à jour consiste en une incrémentation du compteur de cellules.
- Envoi de l'octet de longueur L, qui est la recopie du compteur d'octets si F = 1 (fin de message) et qui a pour valeur 28 si F=O.
- Lecture de 28 octets dans la zone de la mémoire d'émission ou est stocké le message, cette zone étant spécifiée dans la commande par le bit Z, et envoi de ces octets sur l'interface d'émission AIIE.
- Envoi des deux octets CRC de contrôle cyclique par redondance, ledit contrôle étant calculé au fil de l'eau sur les 32 octets utiles de la cellule.
- Nouvelle émission de cellules jusqu'à épuisement du compteur d'octets, et dans ce cas :
   . positionnement à "1" du bit TA, ou TB, du registre RECPIA ou RECPIB et envoi, si cela était spécifié dans la commande, d'une interruption vers le processeur,
   . nouvelle scrutation de l'état de la mémoire de commande d'émission FE, par le circuit CTP.

Le compteur d'octets à transmettre, qui a été initialisé dans le CTP, après lecture de la commande dans la mémoire d'émission FE, est décrémenté d'une unité à chaque émission d'un octet d'informations (les octets d'informations sont contenus dans la mémoire d'émission) sur le réseau RTTA.

Dans le sens réception le dispositif de l'invention comporte également deux interfaces :
- une interface avec le processeur de traitement du niveau 2.2, constituée de la mémoire de réception MR, de type RAM double port, pouvant être écrite ou lue simultanément par le circuit CTP et le processeur, et de la mémoire de commande de réception FR,
- et l'interface de réception AIIR du circuit de traitement CTP.

La mémoire de réception MR, représentée schématiquement figure 6, est constituée de mots mémoire de 16 bits et comprend trois parties principales :
- une partie données DO découpée en zones de 28 octets ou de 29 octets, si on utilise Ip, selon que le champ INFOS des cellules comporte 28 ou 29 octets. La partie données comporte 1407 zones,
- une partie descripteurs DES qui regroupe tous les descripteurs associés aux zones précédentes. A chaque zone est associé un descripteur de zone, de 4 octets,
- une partie contextes de réception CRx, utilisée pour le séquencement des cellules et pour l'identification de la première zone relative à un message reçu sur un circuit virtuel. A chaque circuit virtuel traité est associé un contexte de réception de 4 octets ; le dispositif de l'invention traitant 2048 circuits virtuels, la partie contextes de réception CRx est donc dimensionnée pour 8192 octets.
- En plus des trois parties principales indiquées ci-dessus, la mémoire de réception MR comporte :
   . un registre RRCPI, qui est un mot mémoire, dans lequel un bit U indique au processeur un débordement éventuel de la mémoire de réception MR (U=1),
   . un mot mémoire, qui est un registre compteur horaire H.

La figure 7 donne la structure d'un descripteur de zone de 4 octets, chaque descripteur occupant deux mots de la mémoire de réception MR ; cette structure comprend :
. CV, bits 0 à 10, pour indiquer le numéro de circuit virtuel sur lequel a été reçu le contenu de la zone correspondant au descripteur de zone,
. LD, bits 16 à 20, longueur des données, pour indiquer le nombre d'octets utiles stockés dans la zone associée au descripteur,
. F, bit 29, pour indiquer que la zone contient la fin d'un message,
. D, bit 30, pour indiquer que la zone contient le début d'un message,
. S, bit 31, pour indiquer l'état de la zone libre ou signalée ; dans ce dernier cas il s'agit de la première zone où a été reçu le début d'un message complet dont l'arrivée a été signalée au processeur.
. Les bits 11 à 15 et 21 à 28 sont inutilisés.

La figure 8 donne la structure d'un contexte de réception, qui comprend :
. Ad.DES.Z1, bits 0 à 13 ; 14 bits de poids fort de l'adresse du premier mot du descripteur de la zone qui contient le début du message,
. No Cell, bits 16 à 20, numéro de la prochaine cellule attendue du message multicellules en cours de réception,
. E, bit 31, pour indiquer, E=1, qu'un message comportant plusieurs cellules est en cours de réception sur le circuit virtuel correspondant au contexte de réception.

La gestion de la partie données DO et de la partie descripteurs DES de la mémoire de réception MR est du type tampon circulaire. La zone en haut du tampon et le descripteur correspondant sont repérés chacun par un pointeur courant respectif situé à l'intérieur du circuit CTP, qui est en fait l'adresse du premier mot mémoire de chacune desdites parties. A chaque rangement des informations d'une cellule la valeur du pointeur courant de zone est incrémentée de 14 et la valeur du pointeur courant descripteur est incrémentée de 2 (chaque mot mémoire est un mot de 16 bits).

L'algorithme de traitement de la réception est le suivant :

Sur l'interface de réception AIIR le circuit CTP lit l'en-tête d'une cellule reçue et mémorise en interne le numéro de circuit virtuel, CV (voir figure 2A, en-tête des cellules), lit l'octet de contrôle CTRL, et l'octet de longueur L ( voir figure 2B, contenu d'une cellule) s'il y a lieu.

Dans la mémoire de réception MR, le circuit CTP lit le contexte de réception associé au circuit virtuel reçu et le descripteur associé à la zone données indiquée par le pointeur courant.

Quatre cas de fonctionnement peuvent alors être distingués, suivant la valeur des bits D et F de l'octet de contrôle CTRL.

Le squelette commun à ces quatre cas de fonctionnement est le suivant :
- confrontation du bit E du contexte de réception avec les bits D et F de la cellule reçue, pour détecter des erreurs de séquencement :
   . du type erreur 1, arrivée d'une cellule début, D=1, alors que l'on attendait, lorsque E=1, une cellule suite, D=O, F=0, ou une cellule fin, D=O, F=1,
   . ou du type erreur 4, arrivée d'une cellule suite, D=O, F=O ou fin, D=O, F=1, alors que l'on attendait, lorsque E=O, une cellule début, D=1.
- Confrontation du numéro N de la cellule reçue (ce numéro est contenu dans 5 bits de l'octet de contrôle CTRL) et du numéro attendu, N° Cell, inscrit dans le contexte de réception, pour détecter les pertes de cellules sur un message long, erreur 2. La valeur du numéro de cellule attendu N° Cell, est réinitialisée à chaque cellule début de message long (D=1, F=O), et mise à jour à chaque cellule suite (D=O, F=O).

La valeur du numéro N° Cell n'est pas prise en compte dans le cas d'une seule cellule, D=1, F=1.
- Analyse des bits S et D du descripteur de la zone courante, repérée par le pointeur courant de zone, pour déterminer s'il est possible d'occuper la zone :
. S=O, D=O occupation de la zone
. S=O, D=1 occupation de la zone
. S=1, D=O occupation de la zone
. S=1, D=1 non occupation de la zone, abandon de la cellule, erreur 3.

En cas d'occupation, stockage de la partie INFOS de la cellule reçue dans la zone courante, mise à jour du numéro de circuit virtuel CV du descripteur de la zone (bits 0 à 16) et incrémentation des pointeurs courants de zone et de descripteur.
- Analyse de la valeur du contrôle cyclique par redondance, CRC, de la cellule reçue pour détecter les erreurs bit sur la cellule, erreur 5.
- Mise à jour du descripteur de la zone, bits S, D, F et LD, du contexte réception associé au circuit virtuel de la cellule reçue, bit E et bits 0 à 13, Ad.DES.Z1 donnant l'adresse du premier mot du descripteur de la zone qui contient le début du message s'il s'agit de la première cellule d'un message, du mot mémoire RRCPI, et du compteur horaire H.
- Si la cellule contient une fin de message, F=1, et s'il n'y a pas eu d'erreur :
   . le bit S du descripteur de la zone contenant la 1ère cellule du message est mis à "1" pour signaler cette zone ; dans le cas d'un message monocellule, D=1, F=1, il s'agit du descripteur de la zone en cours, et dans le cas d'une cellule fin, D=O, F=1, l'adresse de la zone contenant la première cellule est indiquée dans le contexte,
   . une commande, dont le format est donné figure 9, est envoyée par le circuit CTP dans la mémoire de commande de réception FR.

La commande, figure 9, est donnée par quatre octets et comporte :
. HS, bits 0 à 15, heure de signalisation : c'est l'heure à laquelle est envoyée la commande, cette heure étant donnée par le registre compteur horaire H de la mémoire de réception MR au moment de l'envoi.
. Ad DES Z1, bits 16 à 29 ; il s'agit des 14 bits de poids faible de l'adresse du premier mot du descripteur de la zone qui contient le début du message.
. T, bits 30 et 31, le type de la commande, pour usage ultérieur, ces bits sont positionnés à "11".

A l'exception du cas d'erreur 1, dans tous les autres cas d'erreur le message en cours de réception est abandonné et ne sera pas transmis au processeur. Après une erreur, le traitement consiste : à remettre à zéro le bit E du contexte de réception associé au circuit virtuel du message (ou cellule) reçu, afin de permettre l'arrivée du début d'un prochain message sur le même circuit virtuel sans provoquer d'erreur intempestive, et à remettre à zéro le bit D du descripteur de la première zone du message en cours de réception pour libérer cette zone. Cependant, dans le cas d'une erreur sur le contrôle cyclique par redondance, erreur 5, il y a effectivement occupation d'une zone de données car l'erreur est détectée après rangement de la cellule dans la partie données, DO, de la mémoire de réception MR ; dans les autres cas d'erreur la cellule n'est pas rangée dans la mémoire de réception et les pointeurs courants de zone et de descripteur ne sont pas incrémentés.

Dans le cas de la lecture d'un descripteur dont le bit S=O et le bit D=1 (c'est le cas d'une zone contenant le début d'un message dont on a perdu ou pas encore reçu la fin), il y a prise de cette zone. Cependant, il est nécessaire de remettre à zéro le bit E (indication de message long en cours de réception) du contexte de réception du message précédemment contenu dans cette zone de manière à pouvoir recevoir un nouveau message sur le circuit virtuel qui occupait ladite zone ; le descripteur contient le numéro de circuit virtuel, ce qui permet de retrouver le contexte de réception associé à ce circuit virtuel, afin d'y remettre le bit E à zéro.

La combinaison S=1 et D=O n'est pas utilisée ; la zone est considérée comme libre.

La lecture de la partie données DO de la mémoire de réception MR s'effectue au rythme du processeur. Celui-ci vient explorer la mémoire de commande de réception FR quand elle passe de vide à non vide, puis à chaque message lu, jusqu'à ce qu'il trouve la mémoire de commande de réception vide.

Le processus de lecture du message par le processeur est le suivant :
. lecture de la commande en réception (figure 9) dans la mémoire de commande de réception FR,
. lecture du descripteur de la zone contenant le début du message, dont l'adresse, Ad.DES.Z1. est donnée par la commande, de manière à accéder au numéro de circuit virtuel du message à lire, ce numéro étant donné par les bits 0 à 10, n° CV, du descripteur de zone,
. dans le cas d'un message monocellule, D=1, F=1, lecture de la zone correspondant au descripteur,
. dans le cas d'un message long, D=1, F=O, balayage des descripteurs de même numéro de circuit virtuel depuis la première zone jusqu'à trouver le descripteur de zone ayant F=1, qui est le dernier descripteur du message, puis lecture des zones de données correspondant aux descripteurs de zone retenus.

Une horloge est également disponible dans la mémoire de réception MR ; il s'agit du mot mémoire H qui fait fonction de compteur à 16 bits et est incrémenté par le circuit CTP à chaque temps cellule. Au moment de la signalisation d'un message, l'heure courante est inscrite dans la commande, bits HS de celle-ci, figure 9. Lorsque le processeur viendra lire la mémoire de commande de réception FR, il connaîtra l'âge du message par comparaison entre l'heure donnée par la commande et l'heure courante. Cela permet, par exemple, de ne pas traiter les messages trop anciens.

Les cinq cas d'erreur mentionnés précédemment nécessitent les actions suivantes :
- Erreur 1 : Perte de la fin du message précédent sur le même circuit virtuel.
   Remettre à zéro l'indicateur D du descripteur de la première zone pour purger le message ; l'adresse de ce descripteur est indiquée dans le contexte de réception de ce circuit virtuel.
- Erreur 2 : Perte d'une ou de plusieurs cellules suite du message courant, ou de la fin du message précédent et du début du message courant.
   Remise à zéro de l'indicateur E (message en cours) du contexte de réception relatif au circuit virtuel, et de l'indicateur D du descripteur de la première zone pour purger le message.
- Erreur 3 : Un débordement de la mémoire de réception MR a été détecté (bit U du mot RRCPI).
   Purge du message en cours par remise à zéro de l'indicateur D du descripteur de la première zone et de l'indicateur E, message en cours, du contexte de réception du circuit virtuel, si besoin ; pas d'incrémentation des pointeurs courants de zone et de descripteur.
- Erreur 4 : Perte du début du message courant.
   Abandon de la cellule reçue, et pas d'incrémentation des pointeurs.
- Erreur 5 : Erreur CRC (contrôle cyclique par redondance)
   Remise à zéro de l'indication D du descripteur de la première zone, et de l'indicateur E du contexte de réception dans le cas d'une cellule suite, pour purger le message.

Chaque fois que l'indicateur D d'un descripteur de zone est mis à zéro, l'indicateur S dudit descripteur est également mis à zéro pour éviter, le cas échéant, la persistance de configurations S=1, D=O, dans la mémoire de réception MR.

Dans le sens émission, lorsqu'il n'y a pas de message à traiter (fin d'émission du message en cours et mémoire de commande d'émission FR vide), le circuit de traitement du protocole CTP doit positionner à zéro le signal de présence cellule de la partie émission de l'interface AII ; les octets émis sur le réseau RTTA sont positionnés à "1".

Dans le sens réception, lorsque le signal présence cellule indique une cellule vide, le circuit CTP doit inhiber tous les accès vers la mémoire de réception MR et la mémoire de commande de réception FR, concernant cette cellule, à l'exception du compteur horaire H qui est incrémenté de manière normale. Le circuit CTP doit également inhiber l'incrémentation des pointeurs de zone et de descripteur.

Le circuit de traitement du protocole CTP doit fournir un ordre d'interruption au processeur de traitement des niveaux supérieurs dans les deux cas suivants :
- Fin d'émission de message et bit I de la commande d'émission ce message, figure 5, positionné à "1".
- Débordement de la mémoire de réception MR (lecture d'un descripteur dont les bits S et D sont à "1".

Le processeur peut identifier la source de l'interruption par la lecture des mots mémoires RECPIA, RECPIB et RRCPI.

Le circuit de traitement CTP reçoit de l'extérieur une horloge locale de fréquence nominale Fo de 15,6 Mhz, par exemple ; cette horloge, après division par 8 est utilisée pour la lecture des octets sur le réseau RTTA.

La partie réception de l'interface AII délivre un signal de synchronisation cellule qui est utilisé pour synchroniser :
. le diviseur par 8 pour obtenir Fo/8,
. le traitement des cellules reçues,
. le traitement des cellules émises ; celles-ci sont émises en phase octet et cellule avec les cellules reçues,
. les accès vers la mémoire M, double port.

Les valeurs numériques indiquées dans ce qui précède n'ont été données qu'à titre d'exemple non limitatif, notamment en ce qui concerne le dimensionnement des cellules qui bien entendu sera mis en conformité avec les normes lorsque celles-ci seront fixées.

## Revendications

1. Dispositif de traitement de messages de signalisation dans un réseau de télécommunications en technique temporelle asynchrone (RTTA) dans lequel les échanges d'informations de toute nature se font par cellules selon un protocole de communication adapté à la technique temporelle asynchrone chaque cellule étant précédée d'un en-tête, comportant un numéro de circuit virtuel, lesdits messages de signalisation étant échangés entre des stations de commande reliées par le réseau de télécommunications et exploités dans les stations de commande par un processeur traitant le niveau 2.2 du protocole de communication, caractérisé par le fait qu'il est implanté dans chaque station de commande pour la relier au réseau de télécommunications (RTTA) et qu'il comporte un circuit de traitement de protocole (CTP) relié au réseau de télécommunications, une mémoire (M), une mémoire de commande d'émission (FE), une mémoire de commande de réception (FR), un bus de données (BD) relié au circuit de traitement (CTP) à la mémoire (M) et aux mémoires de commande (FE, FR), un bus d'adresses (BA) relié au circuit de traitement, (CTP) et à la mémoire (M), et un bus processeur (BP) relié à la mémoire (M), aux mémoires de commande (FE, FR) et audit processeur, et que le circuit de traitement (CTP) assure des fonctions de niveau 2.1 du protocole : détection des erreurs de transmission cellule par cellule, détection des pertes ou des ajouts de cellules, fragmentation en cellules d'un message de signalisation délivré par le processeur, et désentrelacement des cellules relatives à plusieurs messages de signalisation à la réception.

2. Dispositif selon la revendication 1, caractérisé par le fait que la mémoire (M) comprend une mémoire d'émission (ME) et une mémoire de réception (MR), que la mémoire d'émission (ME) comprend une première zone émission (ZA) et une deuxième zone émission (ZB) pour stocker les messages à émettre délivrés par le processeur, un premier (RECPIA) et un deuxième (RECPIB) mots mémoire associés aux première et deuxième zones émission et ayant chacun un indicateur (TA ; TB) de fin de message positionné par le circuit de traitement en fin de message émis et lu par le processeur, et une partie contexte d'émission (CTx) ayant un contexte d'émission par circuit virtuel traité par le dispositif de traitement (CTP), chaque contexte d'émission indiquant un numéro de cellule à émettre et faisant fonction de compteur de cellules émises, et que la mémoire de réception (MR) comprend une partie données (DO) constituée de zones informations correspondant chacune à un champ d'information d'une cellule, d'une partie descripteurs (DES) ayant autant de descripteurs qu'il y a de zones informations, chaque descripteur ayant un premier indicateur (S) d'état de la zone informations correspondante, un deuxième indicateur (D) pour indiquer si ladite zone contient le début d'un message, un troisième indicateur (F) pour indiquer si ladite zone contient la fin d'un message, et donnant le nombre d'octets informations stockés dans ladite zone et le numéro de circuit virtuel sur lequel le contenu de la zone a été reçu, un registre compteur horaire (H), un troisième mot mémoire (RRCPI) ayant un indicateur de débordement (U) et une partie contexte de réception (CRx) ayant un contexte de réception par circuit virtuel traité par le circuit de traitement (CTP), chaque contexte de réception donnant l'adresse d'un descripteur correspondant à une zone contenant le début d'un message, un numéro de prochaine cellule attendue, et ayant un quatrième indicateur (E) pour indiquer qu'un message comportant plusieurs cellules est un cours de réception sur le circuit virtuel correspondant audit contexte de réception.

3. Dispositif selon la revendication 2, caractérisé par le fait que la mémoire de commande d'émission (FE) est du type FiFo, écrite par le processeur et lue par le circuit de traitement de protocole (CTP), le processeur délivrant, pour chaque message à émettre, une commande en émission indiquant la zone émission (ZA ; ZB) dans laquelle le message est stocké, le nombre d'octets dudit message, et le numéro de circuit virtuel sur lequel ledit message doit être émis.

4. Dispositif selon la revendication 2, caractérisé par le fait que la mémoire de commande de réception (FR) est du type FIFO, écrite par le circuit de traitement (CTP) et lue par le processeur, le circuit de traitement délivrant, pour chaque message reçu, une commande en réception indiquant un numéro de zone informations de la mémoire de réception (MR) contenant le début d'un message, et l'heure à laquelle ladite commande a été délivrée.

5. Dispositif selon la revendication 1, caractérisé par le fait que pour la détection des erreurs de transmission cellule par cellule, chaque cellule comporte une indication de contrôle cyclique par redondance (CRC) effectué sur toute la cellule.

6. Dispositif selon la revendication 1, caractérisé par le fait que la mémoire (M) est une mémoire double port.

## Patentansprüche

1. Einrichtung zur Verarbeitung von Signalisationsnachrichten in einem mit der asynchronen Zeitmultiplextechnik arbeitenden Fernmeldenetz (RTTA), bei dem der Informationsaustausch jeder Art in form von Zellen gemäß einem Kommunikationsprotokoll erfolgt, das an die asynchrone Zeitmultiplextechnik angepaßt ist, wobei jeder Zelle ein Vorspann vorausgeht, der eine Nummer des virtuellen Kreises aufweist, und wobei die Signalisationsnachricht zwischen Steuerstationen ausgetauscht wird, die über das Fernmeldenetz verbunden sind und in den Steuerstationen durch einen Prozessor ausgewertet wird, der die Ebene 2.2 des Kommunikationsprotokolls verarbeitet, dadurch gekennzeichnet, daß die Einrichtung in jeder Steuerstation installiert ist, um sie mit dem Fernmeldenetz (RTTA) zu verbinden, und daß sie eine Protokollverarbeitungsschaltung (CTP), die an das Fernmeldenetz angeschlossen ist, einen Speicher (M), einen Sendesteuerspeicher (FE), einen Empfangssteuerspeicher (FR), einen Datenbus (BD), der an die Verarbeitungsschaltung (CTP), an den Speicher (M) und an die Steuerspeicher (FE, FR) angeschlossen ist, einen Adressbus (BA), der mit der Verarbeitungsschaltung (CTP) und dem Speicher (M) verbunden ist, und einen Prozessorbus (BP) aufweist, der mit dem Speicher (M), den Steuerspeichern (FE, FR) und dem Prozessor verbunden ist, und daß die Verarbeitungsschaltung (CTP) Funktionen auf der Ebene 2.1 des Protokolls wahrnimmt, nämlich das Erfassen von Übertragungsfehlern Zelle für Zelle, die Erfassung von Verlusten oder Hinzufügungen von Zellen, die Zerstückelung einer vom Prozessor gelieferten Signalisationsnachricht in Zellen und Entschachtelung der Zellen beim Empfang, die sich auf mehrere Signalisationsnachrichten beziehen.

2. Einrichtung nach Anspruch 1, dadurch gekennzeichnet, daß der Speicher (M) einen Sendespeicher (ME) und einen Empfangsspeicher (MR) aufweist, daß der Sendespeicher (ME) eine erste Sendezone (ZA) und eine zweite Sendezone (ZB) zum Speichern der vom Prozessor gelieferten, auszusendenden Nachrichten, ein erstes (RECPIA) und ein zweites (RECPIB) Speicherwort, die der ersten und der zweiten Sendezone zugeordnet sind und je einen Indikator (TA, TB) für das Nachrichtenende haben, der durch die Verarbeitungsschaltung am Ende der gesendeten Nachricht gesetzt und vom Prozessor gelesen wird, und einen Sendekontextabschnitt (Ctx) aufweist, der einen Sendekontext je virtuellem Kreis besitzt, der von der Verarbeitungseinrichtung (CTP) verarbeitet wird, wobei jeder Sendekontext eine Nummer einer zu sendenden Zelle angibt und einen Zähler der gesendeten Zellen darstellt, und daß der Empfangsspeicher (MR) einen Datenabschnitt (DO), bestehend aus Informationszonen, die je einem Informationsfeld einer Zelle entsprechen, einen Deskriptorabschnitt (DES), der ebenso viele Deskriptoren besitzt, wie es Informationszonen gibt, wobei jeder Deskriptor einen ersten Zustandsindikator (S) der entsprechenden Informationszone, einen zweiten Indikator (D) zum Anzeigen, ob die Zone den Anfang einer Nachricht enthält, einen dritten Indikator (F) zum Anzeigen aufweist, ob die Zone das Ende einer Nachricht enthält, und wobei jeder Deskriptor die Anzahl der Informationsbytes, die in der genannten Zone gespeichert sind, und die Nummer des virtuellen Kreises angibt, über die der Inhalt der Zone empfangen worden ist, ein Zeitzählregister (H), ein drittes Speicherwort (RRCPI) mit einem Überlaufindikator (U) und einen Empfangskontextabschnitt (Crx) aufweist, der einen Empfangskontext je virtuellen Kreis besitzt, der von der Verarbeitungsschaltung (CTP) verarbeitet wird, wobei jeder Empfangskontext die Adresse eines Deskriptors entsprechend einer Zone, die den Anfang einer Nachricht und eine Nummer der nächsten erwarteten Zelle angibt, und einen vierten Indikator (E) aufweist, der anzeigt, daß eine Nachricht, die mehrere Zellen umfaßt, gerade über den dem Empfangskontext entsprechenden virtuellen Kreis empfangen wird.

3. Einrichtung nach Anspruch 2, dadurch gekennzeichnet, daß der Sendesteuerspeicher (FE) ein FIFO-Speicher ist, der vom Prozessor beschrieben und von der Protokollverarbeitungsschaltung (CTP) gelesen wird, wobei der Prozessor für jede auszusendende Nachricht einen Sendebefehl liefert, der die Sendezone (ZA; ZB), in der die Nachricht gespeichert ist, die Anzahl der Bytes der Nachricht und die Nummer des virtuellen Kreises angibt, über den die Nachricht gesendet werden soll.

4. Einrichtung nach Anspruch 2, dadurch gekennzeichnet, daß der Empfangssteuerspeicher (FR) ein FIFO-Speicher ist, der von der Verarbeitungsschaltung (CTP) beschrieben und vom Prozessor gelesen wird, wobei die Verarbeitungsschaltung für jede empfangene Nachricht eine Empfangssteuerung liefert, die die Nummer der Informationszone des Empfangsspeichers (MR) angibt, die den Anfang einer Nachricht und den Zeitpunkt angibt, in dem die Steuerung geliefert worden ist.

5. Einrichtung nach Anspruch 1, dadurch gekennzeichnet, daß für die Erfassung der Übertragungsfehler je Zelle jede Zelle eine Angabe über die die gesamte Zelle umfassende zyklische Kontrolle der Redundanz (CRC) aufweist.

6. Einrichtung nach Anspruch 1, dadurch gekennzeichnet, daß der Speicher (M) ein Speicher mit 2 Ports ist.

## Claims

1. Apparatus for processing signalling messages in an asynchronous time division telecommunications network (ATDN) in which information of all kinds is interchanged by means of cells using a communications protocol adapted to asynchronous time division, each cell being preceded by a header which includes a virtual circuit number, said signalling messages being interchanged between control stations connected to the telecommunications network and being exploited within control stations by a processor for processing level 2.2 of the communications protocol, the apparatus being characterized in that it is implanted in each control station for connecting the station to the telecommunications network (ATDN), in that it includes a protocol processing circuit (CTP) connected to the telecommunications network, a memory (M), a transmit control memory (FE), a receive control memory (FR), a data bus (BD) connected to the processor circuit (CTP), to the memory (M), and to the control memories (FE, FR), an address bus (BA) connected to the processor circuit (CTP) and to the memory (M), and a higher level processor bus (BP) connected to the memory (M), to the control memories (FE, FR), and to the said higher level processor, and in that the protocol processor circuit (CTP) performs level 2.1 functions of the protocol: detecting transmission errors cell-by-cell, detecting lost or added cells, splitting up a signalling message from the higher level processor into cells, and de-interlacing cells on reception belonging to a plurality of different signalling messages.

2. Apparatus according to claim 1, characterized in that the memory (M) comprises a transmit memory (ME) and a receive memory (MR), in that the transmit memory (ME) comprises a first transmit zone (ZA) and a second transmit zone (ZB) for storing the messages to be transmitted as delivered by the higher level processor, first and second memory words (RECPIA, RECPIB) associated with the first and second transmit zones, each including an end-of-message flag (TA, TB) sent by the processor circuit at the ends of messages transmitted or read by the processor, and a transmit context portion (CTx) having one transmit context per virtual circuit processed by the processor circuit (CTP), each transmit context specifying a number of a cell to be transmitted and acting as a transmitted cell counter, and in that the receive memory (MR) comprises a data portion (DO) constituted by information zones each corresponding to an information field of a cell, by a descriptor portion (DES) having as many descriptors as there are information zones, each descriptor having a first flag (S) specifying the state of the corresponding information zone, a second flag (D) for indicating whether the zone contains the beginning of a message, a third flag (F) for indicating whether the zone contains the end of the message, and also giving the number of information bytes stored in the said zone and the number of the virtual circuit over which the contents of the zone was received, a clock counter register (H), a third memory word (RRCPI) having an overflow flag (U), and a receive context portion (CRx) having one receive context per virtual circuit processed by the processor circuit (CTP), each receive context giving the address of a descriptor corresponding to a zone containing the beginning of a message, a next expected cell number, and having a fourth flag (E) for specifying that a message comprising a plurality of cells is in the process of being received over the virtual circuit corresponding to said receive context.

3. Apparatus according to claim 2, characterized in that the transmit control memory (FE) is of the FIFO type, written to by the higher level processor and read from by the protocol processor circuit (CTP), the higher level processor delivering a transmit command for each message to be transmitted, the transmit command indicating the transmit zone (ZA, ZB) in which the message is stored, the number of bytes in said message, and the number of the virtual circuit over which said message is to be transmitted.

4. Apparatus according to claim 3, characterized in that the receive control memory (FR) is of the FIFO type, written to by the processor circuit (CTP) and read from by the higher level processor, the processor circuit delivering, for each receive message, a receive command indicating an information zone number in the receive memory (MR) containing the beginning of a message, and the time at which said command was delivered.

5. Apparatus according to claim 1, characterized in that in order to detect transmission errors cell-by-cell, each cell includes a cyclic redundancy check indication (CRC) performed over the entire cell.

6. Apparatus according to claim 1, characterized in that the memory (M) is a two-port memory.
